# EUROPÄISCHE PATENTSCHRIFT

(11) **EP 0 739 463 B1**
(45) Veröffentlichungstag und Bekanntmachung des Hinweises auf die Patenterteilung: **31.03.1999**
(21) Anmeldenummer: 95935797.1
(22) Anmeldetag: 13.11.1995
(51) Int. Cl.: F16H 57/00

(54) **ZAHNRADGETRIEBE**
PINION DRIVE
ENGRENAGE

(30) Priorität: 14.11.1994 CH 3403/94
(43) Veröffentlichungstag der Anmeldung: 30.10.1996
(73) Patentinhaber: MAAG Gear AG, CH-8023 Zürich (CH)
(72) Erfinder: DEEG, Thomas, CH-8472 Seuzach (CH); HALLER, Walter, CH-8907 Wettswil (CH)
(74) Vertreter: Troesch Scheidegger Werner AG
(86) Internationale Anmeldenummer: CH9500265
(87) Internationale Veröffentlichungsnummer: WO9615392

(56) Entgegenhaltungen:
- EP-A- 0 411 294
- US-A- 3 489 034

## Beschreibung

Die vorliegende Erfindung betrifft ein Zahnradgetriebe mit zwei oder mehr miteinander in Eingriff stehenden Zahnrädern, welche in einem Hauptgetriebegehäuse in Lagern gelagert sind, gemäss Oberbegriff von Anspruch 1.

Die Leistungsverluste eines Zahnradgetriebes bei Leistungsübertragung entstehen je etwa zur Hälfte in den Lagern und in den Zahneingriffen. Bei den Verzahnungsverlusten unterscheidet man zwischen Zahnreibung, Ventilation der rotierenden Körper und eigentlichen Quetschverlusten in den Zahneingriffen. In Getrieben mit hohen Verzahnungsumfangsgeschwindigkeiten von mehr als 80 m/s sind die Reibungsverluste in der Verzahnung vernachlässigbar klein gegenüber den Ventilations- und Quetschverlusten. Die Ventilationsverluste werden verursacht durch den Widerstand der schnell rotierenden Zahnräder im Medium Luft, durchsetzt mit feinen Oeltropfen. Die Quetschverluste entstehen im Eingriff der Verzahnung, wo das Volumen zwischen zwei unmittelbar im Eingriff stehenden Zahnflanken durch das Abwälzen derselben aufeinander immer kleiner wird, und das Medium zwischen den Zahnflanken während des Zahneingriffs verdrängt werden muss. Bei Getrieben mit Oeleinspritzung in den Ausgriff ist dieses zu verdrängende Medium im wesentlichen wiederum Luft, durchsetzt mit feinen Oelpartikeln.

In der US-A-3 489 034 wird bereits vorgeschlagen, Ventilationsverluste dadurch zu reduzieren, dass im Getriebegehäuse ein Teilvakuum erzeugt wird.

Diese bekannte Konstruktion vermag jedoch die Probleme bei schnellaufenden Getrieben nicht zu lösen, wo neben Ventilationsverlusten auch noch Quetschverluste durch Schmieröl bzw. Kühlöl auftreten. Einerseits ist der Energieaufwand zur Erzeugung und Aufrechterhaltung des Teilvakuums bei der Grösse des Gehäuseraumes relativ hoch, und andererseits ist eine optimale Abfuhr des Öls nicht gewährleistet. Dies mag bei grossen, langsam laufenden Getrieben von untergeordneter Bedeutung sein, nicht jedoch bei schnellaufenden, sogenannten Turbogetrieben. Da das gesamte Getriebegehäuse zu evakuieren war, wurde schliesslich auf solche Lösungen verzichtet.

Aufgabe der vorliegenden Erfindung war die Schaffung eines möglichst verlustarmen Getriebes durch Vermeidung von Ventilations- und Quetschverlusten, bei möglichst einfachem konstruktivem Aufwand.

Diese Aufgabe wurde nun bei einem schnellaufenden Getriebe der eingangs definierten Art erfindungsgemäss durch die Merkmale nach Anspruch 1 gelöst.

Die Idee beruht darauf, eine möglichst kleine Umgebung der Rotoren entweder zu evakuieren oder mit einem Gas zu füllen, in der Art und Weise, dass das spezifische Gewicht der Umgebung, in der die Rotoren sich drehen müssen, reduziert wird. In Frage kommen insbesondere die Gase Wasserstoff und Helium (1. Periode im Periodensystem der Elemente).

Helium besitzt eine 7 mal kleinere Dichte (0.18 kg/m³) als Luft. Man darf daher in einem mit Helium gefüllten Raum bei Umgebungsdruck von einer Atmosphäre (1 atm) einen grobvakuumähnlichen Zustand von ungefähr 85 % Vakuum erwarten. Die Vorteile eines solchen Betriebszustandes gegenüber einer Grobvakuumlösung wären folgende:
- Helium ist ein Edelgas, reagiert nicht mit der Umgebung und ist daher völlig ungiftig.
- Verzicht auf Absaugpumpen. Druckgleichheit zwischen verschiedenen Kammern. Zur Startphase wird die Luft ausgespült.
- Verzicht auf Versteifungen des Getriebegehäuses infolge des Unterdrukes.
- Unbedenkliches Ausfallsystem.

Die Konstruktion mit dem die Zahnräder möglichst eng umgebenden Innengehäuse erlaubt gleichzeitig die optimale Abfuhr der Oels.

Vorzugsweise sind die Mittel zur Evakuierung der Luft aus dem Innenraum des inneren Gehäuses auch so ausgebildet und angeordnet, dass auch Schmier- und Kühlöl aus dem Innenraum gefördert werden kann, was zur wirksamen Vermeidung von Quetschverlusten führt.

Dank der Anordnung eines zusätzlichen inneren Gehäuses, welches die Getrieberäder möglichst eng umschliessen kann, wurde es überraschenderweise möglich, die Luft aus der unmittelbaren Umgebung der Zahnräder zu evakuieren, ohne dass dafür eine ungebührlich hohe Leistung aufzubringen wären und gleichzeitig durch die optimale Abfuhr des Oels Quetschverluste zu vermeiden.

Mit einem Getriebe gemäss der Erfindung wird das Medium Luft weitgehend aus dem Zahneingriff und von den schnell rotierenden Zahnrädern entfernt, mittels Erzeugung eines Teil-Vakuums. Damit werden die Ventilationsverluste und Quetschverluste eliminiert, was eine wesentliche Verbesserung des Gesamtwirkungsgrades des Getriebes zur Folge hat, da die dominierenden Anteile der Verzahnungsverluste wegfallen. Für die Anwender derartiger Getriebe, z.B. in Anlagen zur Stromerzeugung, resultieren wesentliche Einsparungen an Energie bzw. erhöhte Produktionsleistungen.

Besonders bevorzugte Ausführungen des erfindungsgemässen Getriebes sind in den abhängigen Ansprüchen definiert.

Falls die Abdichtungen zwischen den Wellendurchdringungen zwischen der Wand des inneren Gehäuses und den Wellen als Viskodichtungen ausgeführt werden und das Oel nicht gleichzeitig zu evakuieren ist, können diese Viskodichtungen als Mittel zur Evakuierung der Luft aus dem Innenraum eingesetzt werden (kein zusätzlicher Leistungsbedarf). Ueblicherweise wird jedoch eine Pumpe eingesetzt, welche neben der Luft auch das Oel aus dem Innenraum abführt.

Die Erfindung wird nachstehend anhand eines in der Zeichnung dargestellten Ausführungsbeispieles noch etwas näher erläutert. Es zeigen:
- Fig. 1: einen Vertikalschnitt durch eine erste Ausführungsform eines rein schematisch dargestellten Getriebes nach der Erfindung;
- Fig. 2: eine ähnliche Darstellung wie Fig. 1 einer Variante des Getriebes;
- Fig. 3: ein Getriebe mit offenem Oel-Heliumkreislauf, und
- Fig. 4: ein Getriebe mit geschlossenem Oel-Heliumkreislauf.

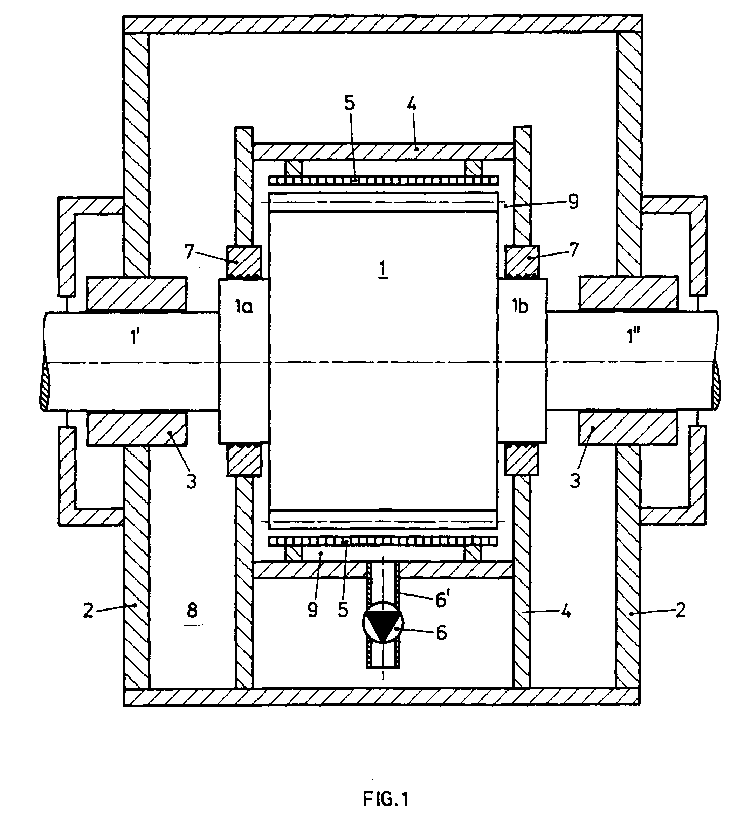

Fig. 1 illustriert ein verlustarmes Getriebe nach der Erfindung. Dabei sind mehrere miteinander im Eingriff stehende Zahnräder mit ihren Wellen 1', 1" in Radiallagern 3 eines üblichen Hauptgehäuses 2 gelagert. Das wesentliche Merkmal der Erfindung liegt nun darin, dass zusätzlich zum üblichen grossvolumigen Hauptgehäuse 2 ein Innengehäuse 4 vorgesehen ist, welches die Getrieberäder 1 möglichst eng daran anliegend umschliesst. Die jeweiligen Zahnradwellenabschnitte bzw. Radnaben la bzw. 1b führen dabei durch Durchführungen in den Seitenwänden des Innengehäuses 4, wobei zwischen den rotierenden Flächen der Wellenabschnitte 1a, 1b und den stationären Wandflächen sog. Viskodichtungen 7 vorgesehen sind. Diese an sich bekannten Wellendichtungen können selbst als Pumpen arbeiten und vermögen dann die sich im Inneren des Innengehäuses 4 befindliche Luft zu evakuieren und in den unter Atmosphärendruck stehenden Raum 8 des Hauptgehäuses 2 zu fördern.

Beim gezeigten Beispiel ist nun aber im unteren Teil des Innengehäuses ein Auslass 6' vorgesehen, in welchem eine Pumpe 6 zum Absaugen der Innenluft und des Oels aus dem Oelsumpf der Vakuumkammer 9 vorgesehen ist. Damit z.B. in den Zahnradausgriff eingespritztes Schmier- und Kühlöl schnell aufgefangen und in den Sumpf geführt wird, sind Oelauffangbleche 5 in unmittelbarer Nähe der Zahnköpfe vorgesehen. Diese Oelauffangvorrichtung bildet Gegenstand eines Patentes mit demselben Anmeldedatum wie das vorliegende Schutzrecht.

Ideal ist selbstverständlich ein möglichst vollkommenes Vakuum im Innenraum 9 des Innengehäuses, um die Ventilationsverluste zu vermeiden. In der Praxis genügt allerdings ein Teilvakuum, dessen Grösse dank der Pumpe 6 einstellbar ist.

Da beim gezeigten Beispiel auch die Quetschverluste (durch im Zahneingriff eingeschlossenes Oel) dank dem Ableiten der grössten Oelmengen weitgehend vermieden werden, arbeitet das Getriebe mit einem optimierten Gesamtwirkungsgrad, was bei der angetriebenen Maschine zu erhöhten Produktionsleistungen führt.

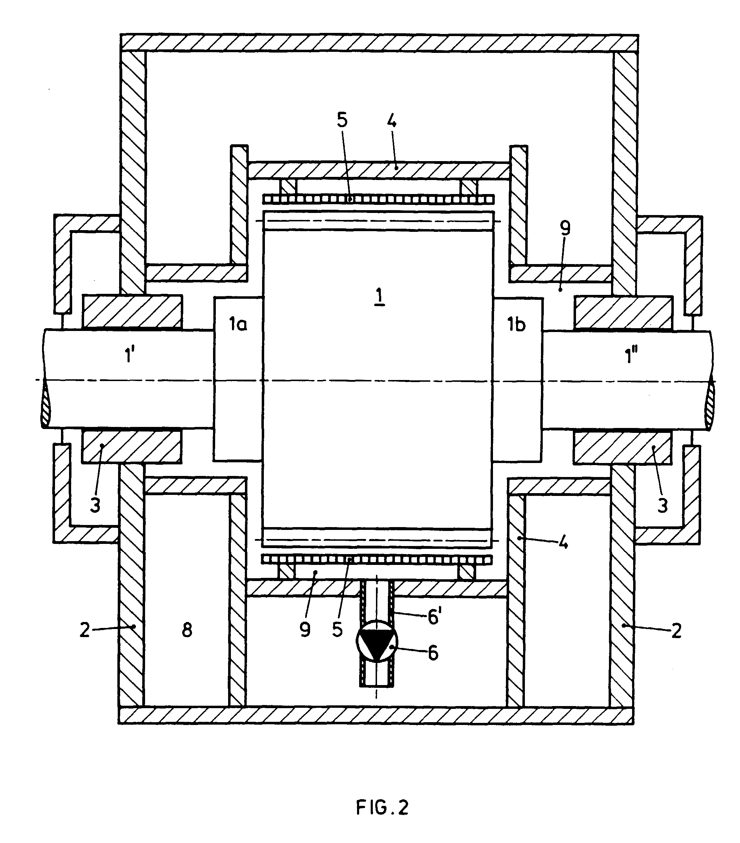

Fig. 2 zeigt eine ähnliche Darstellung eines Getriebes wie Fig. 1, mit dem Unterschied, dass hier auf die Abdichtung der Durchführungen in den Seitenwänden des Innengehäuses 4 durch Viskodichtungen verzichtet wird. Die berührungslosen Durchführungen der Seitenwände sind in Nähe der Wellenabschnitte 1', 1" bzw.

1a, 1b direkt dicht mit der Innenwand des Hauptgehäuses, dabei die Radiallager 3 umgebend, verbunden. Der zu evakuierende Innenraum 9 des Innengehäuses 4 ist etwas grösser als bei Fig. 1, und die Abdichtung erfolgt in den Radiallagern 3. Die Evakuierung erfolgt hier allein über die Vakuumpumpe 6.

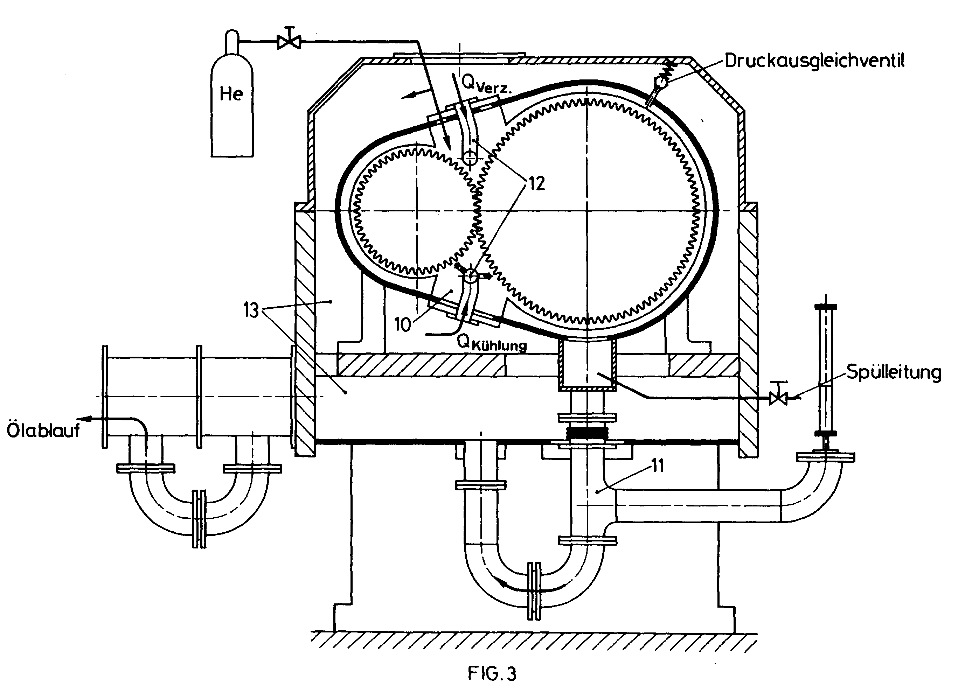

Als Variante zeigt Fig. 3 ein Getriebe mit offenem Oel-Heliumkreislauf. Beim Startvorgang wird der Rotorraum 10 mit der darin befindlichen Luft mit Helium gespült. Eine Heliumschleuse (Sifon) 11 verhindert das Ausfliessen des Heliums aus dem Rotorraum. Die anfallende Oelmenge der Verzahnungsschmierungs-Kühlung 12 und der Schwimmringe wird durch die Schwerkraft aus dem die Rotoren umschliessenden Raum 13 befördert. Die Schwimmringe und der Sifon verhindern ein Durchmischen mit Luft. Nur die im einfliessenden Oel gebundene Luft muss als Störfaktor angesehen werden. Diese Luft kann durch verfahrenstechnische Massnahmen (Verflüssigung von Luft durch Lindeverfahren, Membranfilter für Helium, Ausspülen der Luft vor Eintritt in Heliumraum usw.) vom Innenraum ferngehalten werden.

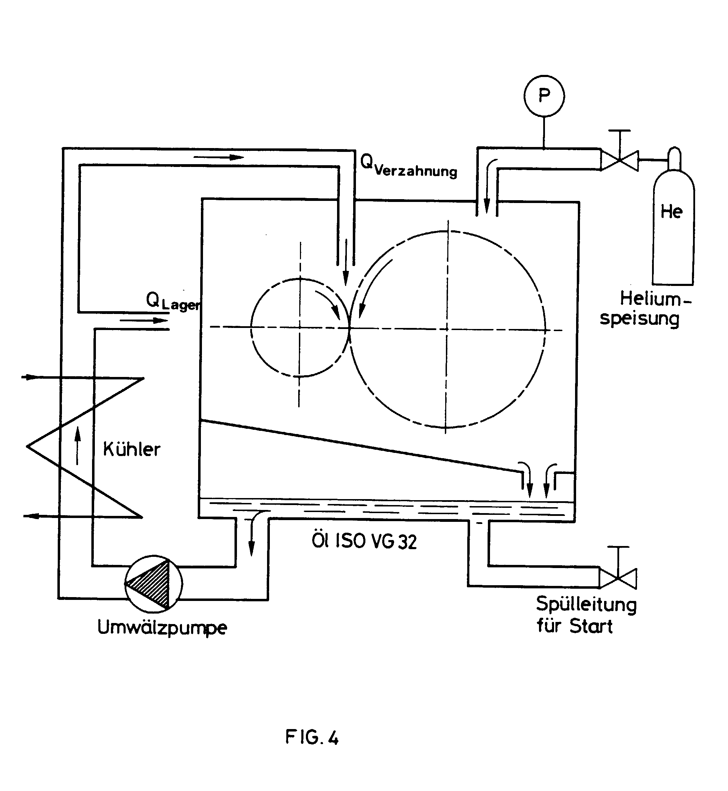

Fig. 4 zeigt eine Ausführungsform mit geschlossenem Oel-Heliumkreislauf. Die geschlossene Anordnung unterscheidet sich von der offenen dadurch, dass das Getriebeöl in einem eigenen Oelkreislauf mit Wärmetauscher und an Stelle von Luft in einer Heliumatmosphäre umgewälzt wird.

## Patentansprüche

1. Zahnradgetriebe mit zwei oder mehr miteinander in Eingriff stehenden Zahnrädern, welche in einem Getriebegehäuse in Lagern gelagert sind, wobei Mittel vorgesehen sind, um die Luft aus dem abgedichteten Innenraum des Getriebegehäuses wenigstens teilweise zu evakuieren und damit ein in der Grösse einstellbares Teilvakuum zu schaffen und aufrechtzuerhalten und/oder die evakuierte Luft ganz oder teilweise durch ein leichteres Gas zu ersetzen, derart dass die Dichte des sich im Betrieb im Innenraum des Gehäuses befindlichen Gases im Vergleich zu Luft höchstens 50 % beträgt, dadurch gekennzeichnet, dass die Zahnräder von einem zusätzlichen inneren Gehäuse umschlossen sind und Mittel vorgesehen sind, um im Innenraum des inneren Gehäuses eine Atmosphäre mit im Vergleich zu Luft geringerer Dichte zu schaffen und aufrechtzuernalten.

2. Getriebe nach Anspruch 1, dadurch gekennzeichnet, dass die Mittel zur Evakuierung von Luft aus dem Innenraum des inneren Gehäuses auch Schmier- und Kühlöl aus dem Innenraum fördern.

3. Getriebe nach einem der Ansprüche 1-2, dadurch gekennzeichnet, dass die Seitenwände des inneren Gehäuses Bohrungen zum Durchführen der Zahnradwellen aufweisen, wobei zwischen den Wänden dieser Bohrungen und den durchgeführten -rotierenden Wellenabschnitten Dichtungen, z.B. Viskosedichtungen, vorgesehen sind.

4. Getriebe nach Anspruch 3, dadurch gekennzeichnet, dass die genannten Dichtungen als Viskodichtungen ausgeführt sind, welche ein Fluidum aus dem Innenraum des inneren Gehäuses in Richtung zum äusseren Getriebegehäuse fördern.

5. Getriebe nach Anspruch 1, dadurch gekennzeichnet, dass die Seitenwände des inneren Gehäuses mit Durchführungen für die Zahnradwellen versehen sind, wobei diese Durchführungen die Radiallager umschliessend zu den Innenwänden des äusseren Gehäuses geführt und mit den Innenwänden dicht verbunden sind.

6. Getriebe nach Anspruch 5, dadurch gekennzeichnet, dass die Radiallager im äusseren Gehäuse als Dichtungen, vorzugsweise als Viskodichtungen, ausgebildet sind.

7. Getriebe nach einem der Ansprüche 1-6, dadurch gekennzeichnet, dass im inneren Gehäuse Mittel zur Zufuhr von Schmier- und/oder Kühlöl in den Ein- oder Ausgriff der Zahnräder vorgesehen sind.

## Claims

1. Gear mechanism with two or more inter-engaging gear wheels, which are mounted in bearings in a gear mechanism housing, means being provided in order to evacuate the air from the sealed interior of the gear mechanism housing, at least partly, and therefore to create and to maintain a partial vacuum, whose magnitude can be adjusted, and/or in order to replace the evacuated air, wholly or partly, by a lighter gas, in such a way that the density of the gas in the interior of the housing during operation is at most 50% in comparison with air, characterized in that the gear wheels are enclosed by an additional, inner housing and means are provided to create and to maintain, in the interior of the inner housing, an atmosphere with a density that is lower in comparison with air.

2. Gear mechanism according to Claim 1, characterized in that the means for evacuating air from the interior of the inner housing also convey lubricating and cooling oil out of the interior.

3. Gear mechanism according to one of Claims 1-2, characterized in that the side walls of the inner housing have holes for the gear shafts to be led through, seals, for example viscous seals, being provided between the walls of these holes and the rotating shaft sections that are led through.

4. Gear mechanism according to Claim 3, characterized in that the said seals are designed as viscous seals, which convey a fluid out of the interior of the inner housing in the direction of the outer gear mechanism housing.

5. Gear mechanism according to Claim 1, characterized in that the side walls of the inner housing are provided with bushings for the gear shafts, these bushings, enclosing the radial bearings, being led to the inner walls of the outer housing and being connected in a sealed fashion to the inner walls.

6. Gear mechanism according to Claim 5, characterized in that the radial bearings in the outer housing are constructed as seals, preferably as viscous seals.

7. Gear mechanism according to one of Claims 1-6, characterized in that means are provided in the inner housing for feeding lubricating and/or cooling oil into the engagement or disengagement of the gear wheels.

## Revendications

1. Engrenage avec deux roues dentées ou plus qui engrènent l'une avec l'autre qui sont logées dans une boîte à engrenages dans des paliers, où des moyens sont prévus pour évacuer l'air de l'espace intérieur rendu étanche de la boîte à engrenages au moins partiellement et pour créer et maintenir ainsi un vide partiel d'une grandeur réglable et/ou pour remplacer l'air évacué totalement ou partiellement par un gaz plus léger de telle sorte que la densité du gaz se trouvant en cours de fonctionnement dans l'espace intérieur de la boîte, par rapport à l'air, représente au maximum 50%, caractérisé en ce que les roues dentées sont entourées d'une boîte intérieure additionnelle et que des moyens sont prévus pour créer et maintenir dans l'espace intérieur de la boîte intérieure une atmosphère, en comparaison à l'air, d'une densité plus réduite.

2. Engrenage selon la revendication 1, caractérisé en ce que les moyens pour évacuer l'air de l'espace intérieur de la boîte intérieure évacuent également l'huile de graissage et de refroidissement de l'espace intérieur.

3. Engrenage selon l'une des revendications 1-2, caractérisé en ce que les parois latérales de la boîte intérieure présentent des perçages pour le passage des arbres des roues dentées, où sont prévues entre les parois de ces perçages et les segments d'arbre tournants passant à travers ceux-ci des garnitures d'étanchéité, par exemple des garnitures d'étanchéité en viscose.

4. Engrenage selon la revendication 3, caractérisé en ce que les garnitures d'étanchéité précitées sont réalisées sous forme de visco-joints qui convoient un fluide de l'espace intérieur de la boîte intérieure en direction vers la boîte à engrenages extérieure.

5. Engrenage selon la revendication 1, caractérisé en ce que les parois latérales de la boîte intérieure sont pourvues de passages traversants pour les arbres des roues dentées, ces passages traversants, en entourant les paliers radiaux, sont guidés vers les parois intérieures du boîtier extérieur et sont reliés d'une manière étanche aux parois intérieures.

6. Engrenage selon la revendication 5, caractérisé en ce que les paliers radiaux dans la boîte extérieure sont réalisés sous forme de garnitures d'étanchéité, de préférence sous forme de visco-joints.

7. Engrenage selon l'une des revendications 1-6, caractérisé en ce que sont prévus dans la boîte intérieure des moyens pour amener de l'huile de graissage et/ou de refroidissement dans l'emplacement en prise ou hors prise des roues dentées.
